# EUROPEAN PATENT SPECIFICATION

(11) **EP 4 167 533 B1**
(45) Date of publication and mention of the grant of the patent: **24.12.2025**
(21) Application number: 21202956.5
(22) Date of filing: 15.10.2021
(51) Int. Cl.: H04L 25/02

(54) **METHOD FOR USER EQUIPMENT FOR IMPROVING A TRANSMISSION EFFICIENCY, METHOD FOR A NETWORK ENTITY, APPARATUS, VEHICLE AND COMPUTER PROGRAM**
VERFAHREN FÜR EIN BENUTZERGERÄT ZUR VERBESSERUNG DER ÜBERTRAGUNGSEFFIZIENZ, VERFAHREN FÜR EINE NETZWERKENTITÄT, GERÄT, FAHRZEUG UND COMPUTERPROGRAMM
PROCÉDÉ POUR UN ÉQUIPEMENT UTILISATEUR PERMETTANT D'AMÉLIORER UNE EFFICACITÉ DE TRANSMISSION, PROCÉDÉ POUR UNE ENTITÉ DE RÉSEAU, APPAREIL, VÉHICULE ET PROGRAMME INFORMATIQUE

(43) Date of publication of application: 19.04.2023
(73) Proprietor: VOLKSWAGEN AG, 38440 Wolfsburg (DE); Seat, S.A., 08760 Martorell (ES)
(72) Inventor: PFADLER, Andreas, 13357 Berlin (DE); MONTERO BAYO, Luca, 08011 Barcelona (ES)
(74) Representative: 2SPL Patentanwälte PartG mbB

(56) References cited:
- EP-A1- 3 376 696
- US-A1- 2020 259 575
- BENJAMIN SLIWA ET AL: "Boosting Vehicle-to-cloud Communication by Machine Learning-enabled Context Prediction", ARXIV.ORG, CORNELL UNIVERSITY LIBRARY, 201 OLIN LIBRARY CORNELL UNIVERSITY ITHACA, NY 14853, 23 April 2019 (2019-04-23), XP081444250, DOI: 10.1109/TITS.2019.2930109

## Description

The present disclosure relates to the field of wireless communication. Embodiments relate to a method for user equipment for improving a transmission efficiency, a method for a network entity, an apparatus, a vehicle and a computer program, more particularly, but not exclusively, to a concept for improving a transmission efficiency on a radio channel, e.g., to adjust a transmission parameter.

The development of 5G has brought increased attention to the automotive industry as a vertical manufacturer expected to leverage the most advanced features of the new generation of wireless communications. Among the main novelties of 5G, a wide range of spectrum possibilities (currently licensed up to the 28 GHz band - the first-ever Millimeter wave band for mobile use), enhanced support for high mobility scenarios and new mechanisms to guarantee and predict the experienced Quality of Service (QoS), have been established as key functions to support an increasingly connected transportation ecosystem.

KR 20 200 095 137 A reveals a wireless communication environment adaptation method using deep learning comprising the steps of periodically receiving in-phase and quadrate samples from a wireless access environment and extracting channel characteristic information including signal-to-noise ratio information, channel state information, and received signal strength indication from the received in-phase and quadrate samples. Further, the method comprises learning a training data set classified from the extracted current channel characteristic information through a recurrent neural network and generating a training result and predicting channel state information at a future time point using a predicted data set classified from the extracted channel characteristic information at the current time and the generated training result.

CN 107 276 698 A reveals a method comprising the monitoring a first target beam, decoding a beacon of the first target beam and if the beacon of the first target beam cannot be decoded successfully, extracting channel state information of the beacon of the first target beam. Further, the method comprises accumulating the channel state information of the beacon of the first target beam to spatial channel state information and obtaining the optimum estimation signal angle of arrival according to a preset channel and the spatial channel state information.

The method also comprises monitoring the beam along the direction of the optimum estimation signal angle of arrival and after a second target beam is monitored, decoding the beacon of the second target beam, wherein the second target beam is the beam supported by a randomly selected antenna array along the optimum estimation signal angle of arrival.

CN 112 364 769 A reveals WiFi-based crowd counting method comprising collecting channel state information data containing human body movement information by user equipment and denoising the channel state information data by using a Butterworth band-pass filter. Further the method comprises removing data redundancy and reducing noise by adopting a principal component analysis dimension reduction algorithm. The method also comprises performing mode identification on the selected channel state information power information, estimating a direction and normalizing the selected amplitude and phase information. Further, the method comprises performing feature extraction, fusing the features of the source domain and the target domain by using an HFA method and obtaining a trained model to predict the number of people.

EP 3 376 696 A1 discloses an apparatus for estimating a multi-hop radio channel between a transmitter, one or more relay stations, and a receiver. The apparatus comprises an environmental prediction unit, which obtains information from cooperative perception, local sensors and a data base. Further comprised is a feature extraction unit which may extract environmental property information and confidence information and provide the outcome to an environment prediction module. Further, a communication prediction unit is comprised which comprises a predictive multi-hop algorithm unit and an application unit for end-to-end parameters. A channel state information can be provided from a network element to the predictive multi-hop algorithm unit. Based on this actual channel state information modification information may be provided to the environment prediction module of the environment prediction unit.

US 2020/259575 A1 discloses a method to predict a future channel condition for a wireless communication channel between a wireless communication device and UE. The method comprises providing a channel metric history and side information to a selector. The channel metric history may include previously measured/obtained values for a metric of a wireless channel between a UE and a second device. The selector may select one of a first predictor 608, a second predictor, or a third predictor based on the channel metric history and/or the side information. The channel metric history may include a series of previous values for one or more different channel metrics. For example, each of the predictors may be optimized for prediction future channel conditions under different conditions or scenarios.

BENJAMIN SLIWA ET AL: "Boosting vehicle-to-cloud Communication by machine Learning-enabled Context Prediction" discloses a machine learning-enabled transmission scheme for client-side opportunistic data transmission. By considering the measured channel state as well as the predicted future channel behavior, delay-tolerant MTC is performed with respect to the anticipated resource-efficiency. The technique itself can be exploited in order to optimize the environmental awareness of the vehicles. In this context, the usage of connectivity maps for anticipatory communication allows to exploit a priori information about the channel quality based on previous measurements in the same geographical area.

A transmission efficiency may depend on several conditions, e.g., a pilot rate used to estimate a channel state information (CSI). To obtain the CSI for two communication nodes both using antenna arrays with beamforming capabilities is a challenging task, as the required pilot signaling increases significantly with the number of antenna elements, which may lead to an undesired signaling overhead. For example, a pilot rate used to estimate the CSI may generate an undesired traffic load on a radio channel and consequently a decreased transmission efficiency. Thus, there may be a need to improve a transmission efficiency on a radio channel.

It is therefore a finding that an adjustment of a transmission parameter based on a deviation between a predicted channel dynamic and a calculated channel dynamic can improve a transmission efficiency, e.g., by reducing a pilot rate and thus reducing a data traffic. For example, a predicted channel dynamic may match a calculated channel dynamic and thus a pilot rate may be reduced. For example, a parameter of the environment used to calculate the channel dynamic may be satisfying and thus a CSI can also be derived from this environment. That way, a transmission efficiency can be improved, e.g., by reducing a signaling overhead.

The present invention is defined by the appended independent claims. Specific embodiments are defined in the dependent claims.

Some examples of apparatuses and/or methods will be described in the following by way of example only, and with reference to the accompanying figures, in which
Fig. 1 shows an example of a method for user equipment;
Fig. 2 shows an example of a method for a network entity; and
Fig. 3 shows a block diagram of an apparatus.

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, e.g., only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

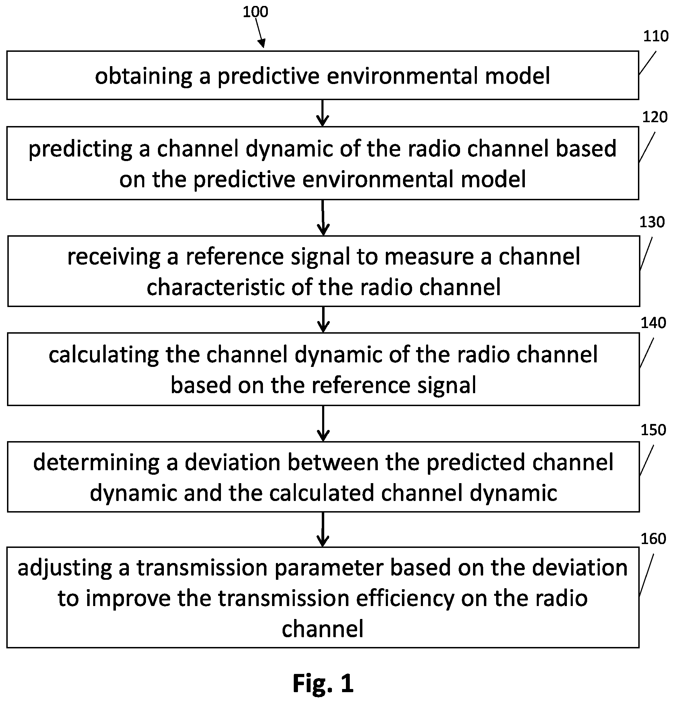

Fig. 1 shows an example of a method 100 for user equipment. The method 100 for the UE is for improving a transmission efficiency on a radio channel. The method 100 comprises obtaining 110 a predictive environmental model and predicting 120 a channel dynamic of the radio channel based on the predictive environmental model. Further, the method 100 comprises receiving 130 a reference signal to measure a channel characteristic of the radio channel and calculating 140 the channel dynamic of the radio channel based on the reference signal. The method 100 also comprises determining 150 a deviation between the predicted channel dynamic and the calculated channel dynamic and adjusting 160 a transmission parameter based on the deviation to improve the transmission efficiency on the radio channel. For example, the transmission parameter can be any parameter related to a reporting of a channel state, e.g., such like a reference signal rate, a report rate, a content of a report. This way, a transmission efficiency can be improved, e.g., by reducing a reference signal rate, a report rate, a content of a report, etc. for determining a CSI.

The UE may communicate in a mobile communication system with a network entity, e.g., a base station. For example, the UE and the network entity may communicate in/via a mobile communication system. The mobile communication system may comprise a plurality of transmission points and/or base stations operable to communicate radio signals with the UE. In an example, the mobile communication system may comprise the UE and a network entity.

A network entity can be located in the fixed or stationary part of the mobile communication system. A network entity may correspond to a remote radio head, a transmission point, an access point, a macro cell, a small cell, a micro cell, a pico cell, a femto cell, a metro cell etc. The term small cell may refer to any cell smaller than a macro cell, e.g., a micro cell, a pico cell, a femto cell, or a metro cell. Moreover, a femto cell is considered smaller than a pico cell, which is considered smaller than a micro cell. A network entity can be a wireless interface of a wired network, which enables transmission and reception of radio signals to UE, such as the UE. Such a radio signal may comply with radio signals as, for example, standardized by 3GPP or, generally, in line with one or more of the above listed systems. Thus, a network entity may correspond to a NodeB, an eNodeB, a BTS, an access point, etc.

The mobile communication system may be cellular. The term cell refers to a coverage area of radio services provided by a transmission point, a remote unit, a remote head, a remote radio head, communication device, UE, network entity or a NodeB, an eNodeB, respectively.

The terms cell and base station may be used synonymously. A wireless communication device, e.g., the UE, can be registered or associated with at least one cell (e.g., the network entity), e.g., it can be associated to a cell, e.g., a network entity, such that data can be exchanged between the network and the mobile in the coverage area of the associated cell using a dedicated channel, connection or connection.

In general, the UE is a device that is capable of communicating wirelessly. In particular, however, the UE may be a mobile UE, e.g., UE that is suitable for being carried around by a user. For example, the UE may be a User Terminal (UT) or User Equipment (UE) within the meaning of the respective communication standards being used for mobile communication. For example, the UE may be a mobile phone, such as a smartphone, or another type of mobile communication device, such as a smartwatch, a laptop computer, a tablet computer, or autonomous augmented-reality glasses. For example, the UE and the network entity may be configured to communicate in a cellular mobile communication system. Accordingly the UE and the network entity may be configured to communicate in a cellular mobile communication system, for example in a Sub-6GHz-based cellular mobile communication system (covering frequency bands between 500 MHz and 6 GHz) or in a mmWave-based cellular mobile communication system (covering frequency bands between 20 GHz and 60 GHz). For example, the UE and the network entity may be configured to communicate in a mobile communication system / cellular mobile communication system. In general, the mobile communication system may, for example, correspond to one of the Third Generation Partnership Project (3GPP)-standardized mobile communication networks, where the term mobile communication system is used synonymously to mobile communication network. The mobile communication system may correspond to, for example, a 5th Generation system (5G), a Long-Term Evolution (LTE), an LTE-Advanced (LTE-A), High Speed Packet Access (HSPA), a Universal Mobile Telecommunication System (UMTS) or a UMTS Terrestrial Radio Access Network (UTRAN), an evolved-UTRAN (e-UTRAN), a Global System for Mobile communication (GSM) or Enhanced Data rates for GSM Evolution (EDGE) network, a GSM/EDGE Radio Access Network (GERAN), or mobile communication networks with different standards, for example, a Worldwide Inter-operability for Microwave Access (WIMAX) network IEEE 802.16, generally an Orthogonal Frequency Division Multiple Access (OFDMA) network, a Time Division Multiple Access (TDMA) network, a Code Division Multiple Access (CDMA) network, a Wideband-CDMA (WCDMA) network, a Frequency Division Multiple Access (FDMA) network, a Spatial Division Multiple Access (SDMA) network, etc.

In addition the UE/ network entity may be suitable for, or configured to, communicating/communicate via non-cellular communication systems, e.g., via a device-to-device vehicular communication system, e.g., according to the IEEE 802.11p standard (Institute of Electrical and Electronics Engineers standard 802.11p for vehicular communication) or via a wireless local area network (e.g., according to IEEE 802.11a, IEEE 802.11b, IEEE 802.11g, IEEE 802.11n, IEEE 802.11ac or IEEE 802.11ax, also known as Wi-Fi 1 through Wi-Fi 6(E)). In particular, the UE and the network entity may be suitable for, or configured to, communicating/communicate in the frequency band between 5 GHz and 7.1 GHz, which covers communication in the 5 GHz band (for WiFi in the 5 GHz band), 5.9 GHz band (for vehicular communication according to the 802.11p standard) and between 5.9 GHz and 7.1 GHz (for WiFi in the 6 GHz band).

A connection between the UE and the network entity may be a wireless connection, e.g., a mmWave-based connection over the mobile communication system (e.g., using carrier frequencies of at least 20 GHz) or may be performed at lower carrier frequencies, e.g., using carrier frequencies of at most 7.5 GHz. For example, the wireless connection between the UE and the network entity may be initiated using the protocols of the mobile communication system, or using a short-range communication system, such as via a wireless local area network outlined above.

As is evident from the above example, while the communication between UE and network entity occurs via the mobile communication system, additional communication and/or alternatively communication (e.g., the network entity is comprised by a vehicle) between the UE and the network entity may occur via a vehicular communication system. Such communication may be carried out directly, e.g., by means of Device-to-Device (D2D) communication. Such communication may be carried out using the specifications of the vehicular communication system. An example of D2D is direct communication between vehicles, also referred to as Vehicle-to-Vehicle communication (V2V) or Vehicle-to-Everything (V2X), car-to-car, Dedicated Short Range Communication (DSRC), respectively. Technologies enabling such D2D-communication include 802.11p, 3GPP systems (4G, 5G, NR and beyond), etc.

Obtaining 110 a predictive environmental model can be done by receiving and/or by determining information. For example, the UE may download a map of a downtown area and may combine position data determined by the UE (e.g., using global positioning system, GPS) and/or provided by the user with the map to determine information about an environment of the UE. The information about the environment can be combined with further information to determine the predictive environmental model. For example, the predictive environmental model can be determined by a processing circuitry, e.g., a central processing unit, of the UE. A user of the UE may provide information about a planned journey to the UE, e.g., by using a navigation software of a vehicle. Thus, the UE can generate the predictive environmental model based on the planned route. For example, the UE may predict a travel duration based on traffic information (which can be received e.g., by a base station) and based on the travel duration the UE can generate the predicted environmental model, e.g., in dependence of a location of the UE on the route.

Optionally or alternatively, the UE may obtain information about the environment in real-time, e.g., by a measurement or receive real-time measurement data, which can be used to determine the predictive environmental model. For example, the UE may obtain information about a movement speed of another vehicle in the environment and thus the predicted environmental model may be based on the movement speed of the other vehicle and the information about the environment.

Optionally or alternatively, the UE may receive the predictive environmental model by another communication device, e.g., an infrastructure, another UE in the environment of the UE, a network entity, etc.

For example, the UE can receive information from a mobile obstacle (e.g., another vehicle) and/or an immobile obstacle (like infrastructure, e.g., a traffic light) that the mobile obstacle may vanish (e.g., the vehicle may drive away) in a predefined time (e.g., a red phase of the traffic light). Thus, the predicted environmental model may predict this change of the environment.

For example, the information about the environment may comprise dynamic data about a mobile obstacle (e.g., another vehicle or bus) of the environment, e.g., a movement speed of the mobile obstacle. Thus, the UE can determine the predicted environmental model based on this information, e.g., the UE may predict the change of the environment by the movement speed of the mobile obstacle to determine a predictive environmental model. In principle an obstacle, can be an object in the line-of-sight between the UE and the network entity and/or an object in a location that cause non-negligible change in the electromagnetic field at the UE.

Predicting 120 the channel dynamic of the radio channel based on the predictive environmental model can be done by a processing circuitry, e.g., a central processing unit, of the UE. The predicted channel dynamic depends on the predicted environmental model. For example, if the predicted environmental model shows no change to the environment in a predefined time (e.g., multiple CSI reporting times) the predicted channel dynamic may be lower than if the predicted environmental model shows a change to the environment in the predefined time. For example, a value for the predicted channel dynamic, indicating a change of the channel dynamic may be zero if no changes in the environment are predicted for the predefined time and may be larger than zero if a change of the environment and thus of the channel dynamic is predicted. For example, if the value for the predicted channel dynamic is zero, a CSI reporting can be reduced or even omitted for the predefined time. For example, with an increasing value of the predicted channel dynamic the need for CSI reporting may increase, which may result in a higher CSI reporting rate for a higher predicted channel dynamic.

Optionally or alternatively, the predicted channel dynamic may depend on a complexity of the predicted environmental model, e.g., a density of obstacles in the predicted environmental model. For example, the user equipment may be positioned in an open landscape or a downtown area. The open landscape may result in a predicted environmental model for the UE with less complexity as a predicted environmental model for the UE in the downtown area (e.g., the open landscape may have very few obstacles resulting in a low density of obstacles, while the downtown area may have many obstacles resulting in a high(er) density of obstacles). Thus, a (value of a) predicted channel dynamic may be increased for the downtown area in comparison to the open landscape, even if both models indicate no change in the environment in the future, because the likelihood of a change in the downtown area may be increased in comparison to the open landscape. For example, more parameters (e.g., for obstacles) in the predicted environmental model may result in an increased (value of a) predicted channel dynamic, e.g., leading to a need for an increased CSI reporting rate.

Receiving 130 a reference signal to measure a channel characteristic may be received by one or more sensors of the UE, which may belong to a wide variety of UE sensors, e.g., a radar sensor, a lidar sensor, automotive radar, ultrasound sensor or a vision-related sensor such as camera or infrared sensors. A reference signal to measure a channel characteristic can be every suitable signal, e.g., a pilot signal.

Calculating 140 the channel dynamic of the radio channel based on the reference signal may be done by a processing circuitry, e.g., a central processing unit, of the UE. For example, an Al may calculate the channel dynamic.

Determining 150 a deviation between the predicted channel dynamic and the calculated channel dynamic may be done by a processing circuitry, e.g., a central processing unit, of the UE.

Adjusting 160 the transmission parameter based on the deviation to improve the transmission efficiency on the radio channel may be based on reducing, pilot signal rate, a reporting rate, a content of a report to determine the CSI and/or on adjusting a beam parameter.

The transmission parameter(s) may define/results in a variation of a channel strength over time and/or over frequency. For example, a choice of the transmission parameter(s) of the radio channel may depend on large-scale fading effects and/or on small-scale fading effects. For example, the choice of the transmission parameter(s) of the radio channel may depend on a coherence time (respectively a Doppler spread), a frequency coherence (respectively a Doppler spread or coherence bandwidth), a noise of the channel, an attenuation of the channel, a coverage of the UE (and respectively of the network entity). For example, a transmission parameter may be a spatial angle, a spatial domain, a transmission power, a beam form, a chosen antenna of a plurality of antennas for beamforming or a repetition rate of an CSI report. Thus, by adjusting a transmission parameter a signal transmission from the UE may be improved on a side of a receiver, e.g., a network entity. For example, for a predicted environmental model with a high density of obstacles a transmission power may be increased and/or a beamforming may be performed in a way, that less obstacles may interact with the signal, which may increase a reception signal strength at the network entity.

Optionally or alternatively, the transmission parameter may be a parameter related to a reporting of a channel state, e.g., a CSI, such like a reference signal rate, a report rate, a content of a report, etc. of a CSI. For example, a transmission parameter may be a pilot signal rate to determine the CSI. Thus, the transmission efficiency cannot be solely increased by improving a signal, e.g., by beamforming, rather the transmission efficiency can be increased by decreasing a reporting of the channel state, e.g., decreasing a pilot signal rate.

In an example, if the deviation is below a threshold adjusting the transmission parameter may be performed by reducing a reference signal rate. For example, a pilot signal rate, a report rate, a content of a report, etc. of a CSI may be reduced. By reducing the pilot signal rate a signaling overhead can be reduced and thus a transmission efficiency can be improved. For example, the UE may inform another communication device, e.g., a network entity, about adjustment of the transmission parameter, e.g., about the reduction of the pilot signal rate.

Optionally, the UE may use a signal parameter, e.g., a predictive QoS, an intensity, etc., to maintain the transmission parameter. For example, the UE may reduce the pilot signal rate and thus it may be non-aware of changes in the channel. However this changes in the channel may impact the signal parameter, e.g., a predictive QoS may decrease, which may lead to an unsatisfying radio channel connection. Thus, the UE may increase the pilot signal rate again to an initial value if a predictive QoS, an intensity, etc. is below a quality level/threshold. This way, the UE may have a control mechanism to prevent an undesired decrease in the radio channel communication.

The threshold may be predefined and may be independently of the environment/predictive environmental model. This way, a transmission efficiency can be improved for all use cases in the same way. For example, the threshold may depend on the environment/predictive environmental model. For an environment with a high density of obstacles (e.g., a downtown area) the threshold may be decreased in comparison to an environment with a low density of obstacles (e.g., an open landscape), because for a higher density of obstacles a lower deviation may still lead to an unsatisfying signal transmission. This way, the threshold can be adjusted to an environment/predicted environmental model.

In an example, the method 100 may further comprise if the deviation is above a threshold repredicting the channel dynamic and redetermining the deviation between the repredicted channel dynamic and the calculated channel dynamic. Further, the method 100 may comprise if the redetermined deviation is below the threshold adjusting the transmission parameter else repeating the repredicting and redetermining until the deviation is below the threshold. This way, the prediction 120 of the channel dynamic may be increased by repredicting the channel dynamic. Since the received 130 reference signal and the calculated 140 channel may reflect the really channel dynamic with a better accuracy as the predicted channel dynamic, the predicted channel dynamic can be corrected with respect to the calculated channel dynamic. For example, an Al may be used to predict 120 the channel dynamic and this way the Al may be trained, e.g., using machine learning, which may improve a future prediction 120 of the channel dynamic.

In an example, the repredicting may be based on a new predictive environmental model. Thus, a data set, e.g., for machine learning of an Al can be increased.

In an example, the predicting and/or repredicting may be based on a machine learning model trained with the predicted channel dynamic and the calculated channel dynamic.

The UE may be configured to provide the information on the calculated channel dynamic and/or the predicted channel dynamic as input to the machine learning model. Machine learning refers to algorithms and statistical models that computer systems may use to perform a specific task without using explicit instructions, instead relying on models and inference. For example, in machine learning, instead of a rule-based transformation of data, a transformation of data may be used, that is inferred from an analysis of historical and/or training data.

Machine learning models are trained using training input data, such like the calculated channel dynamic and/or the predicted channel dynamic. Many different approaches may be used to train a machine learning model. For example, supervised learning, semi-supervised learning or unsupervised learning may be used. In supervised learning, the machine learning model is trained using a plurality of training samples, wherein each sample may comprise a plurality of input data values, and a plurality of desired output values, e.g., each training sample is associated with a desired output value. By specifying both training samples and desired output values, the machine learning model "learns" which output value to provide based on an input sample that is similar to the samples provided during the training. Apart from supervised learning, semi-supervised learning may be used. In semi-supervised learning, some of the training samples lack a corresponding desired output value. Supervised learning may be based on a supervised learning algorithm, e.g., a classification algorithm, a regression algorithm or a similarity learning algorithm. In unsupervised learning, (only) input data might be supplied, and an unsupervised learning algorithm may be used to find structure in the input data, e.g., by grouping or clustering the input data, finding commonalities in the data.

In at least some examples, reinforcement learning (or a derived concept) is used to train the machine learning model. In reinforcement learning, one or more software actors (called "software agents") are trained to take actions in an environment. Based on the taken actions, a reward is calculated. Reinforcement learning is based on training the one or more software agents to choose the actions such, that the cumulative reward is increased, leading to software agents that become better at the task they are given (as evidenced by increasing rewards). This may be the case in various examples of the present disclosure - the machine learning model may be trained to provide a predicted channel dynamic, the machine learning model is trained to output the information on the predicted channel dynamic based on the information on the predictive environment model, the calculated channel dynamic and/or the deviation between the predicted channel dynamic and the calculated channel dynamic provided at the input of the machine learning model.

The machine learning model may be trained using reinforcement learning. During the training, various approaches may be tried and evaluated based on a reward function that is denoted the reward function. The reward function is used to calculate the cumulative reward. Based on the calculated reward, the machine learning model may be altered to perform the actions that have led to a higher cumulative reward, leading to a machine learning model that becomes iteratively better at predicting the channel dynamic. For example, the reward function of the training may be based on the deviation between the predicted channel dynamic and the calculated channel dynamic.

For example, the machine learning model may be an artificial neural network (ANN). ANNs are systems that are inspired by biological neural networks, such as can be found in a brain. ANNs comprise a plurality of interconnected nodes and a plurality of connections, so-called edges, between the nodes. There are usually three types of nodes, input nodes that receiving input values, hidden nodes that are (only) connected to other nodes, and output nodes that provide output values. Each node may represent an artificial neuron. Each edge may transmit information, from one node to another. The output of a node may be defined as a (non-linear) function of the sum of its inputs. The inputs of a node may be used in the function based on a "weight" of the edge or of the node that provides the input. The weight of nodes and/or of edges may be adjusted in the learning process. In other words, the training of an artificial neural network may comprise adjusting the weights of the nodes and/or edges of the artificial neural network, e.g., to achieve a desired output for a given input. In at least some examples, the machine learning model may be deep neural network, e.g., a neural network comprising one or more layers of hidden nodes (e.g., hidden layers), preferably a plurality of layers of hidden nodes. In some examples, the machine learning model may be a pointer network.

Machine learning models are usually used by applying input data to an input of the machine learning model, and by using the output data that is provided at an output of the machine learning model. In artificial neural networks, the input data is provided at the input nodes of the ANN, the input data is subsequently transformed based on the weights of the edges between the nodes of the artificial neural network, and finally output by the output nodes of the ANN. In this case, the previously obtained information is provided as input to the machine learning model. For example, the ANN may comprise one or more of an embedding layers, a (masked) attention layer, a pointer network layer, and a decoding layer, to transform the data between input layer and output layer. In other words, the machine learning model may comprise one or more embedding layers (e.g., one or more neural network layers). For example, the one or more embedding layers may be based on a non-linear activation function, such as the Mish activation function or based on parametric rectified linear units (PReLU).

The UE is configured to provide the information on the distance between the plurality of driving destinations as input to the machine learning model. For example, the UE may be configured to use/execute the machine learning model to affect the transformation between the input and output of the machine learning model.

The training of machine learning models requires significant effort, so being able to re-use a machine learning model for different problem sizes may reduce the overall training time. In various examples of the present disclosure, the machine learning model may be applied to predict/repredict a channel dynamic of a radio channel.

The UE may be configured to obtain training input data for training the machine learning model. The training input data comprises training information on a predicted channel dynamic and/or a calculated channel dynamic. The UE is configured to train the machine learning model using a reinforcement learning algorithm and a reward function. The machine learning model is trained to output information on the channel dynamic of the radio channel based on the training information on a predicted channel dynamic and/or a calculated channel dynamic at the input of the machine learning model. The reward function is based on a deviation between the predicted channel dynamic and the calculated channel dynamic. The UE is configured to provide the machine learning model.

For example, the training input data may be obtained via an interface, e.g., the interface of the UE. The training input data may be obtained from a database, from a file system, from a data structure that is stored in a computer memory, or from a sensor of the UE. The training input data comprises training information on a predicted channel dynamic and a calculated channel dynamic. The term "training information" may merely indicate that the respective data is suitable for, e.g., designed for, training the machine learning model. For example, the training information may comprise information on a predicted channel dynamic and a calculated channel dynamic that is representative of the respective data that is to be processed by the machine learning model, e.g., in order to obtain a machine learning model that is suitable for the task at hand, e.g., suitable for evaluating a favorability predicted channel dynamic.

For example, the machine learning model may output information on a predicting a channel dynamic on the training information on the deviation between the predicted channel dynamic and the calculated channel dynamic provided at the input of the machine learning model. In other words, the machine learning model may be provided with the training input data, which represents a plurality of scenarios of predicting a channel dynamic and calculated channel dynamic, and with the task of finding a predicted channel dynamic with the smallest deviation to the calculated channel dynamic. The machine learning model may be iteratively tweaked to iteratively improve the prediction of a channel dynamic. To decide on which predicted channel dynamic have merits, the reward function may be used. In general, the reward function may be a function that provides an objective measure of a quality of a predicted channel dynamic. For example, the training may be performed with the aim of improving the result of the reward function.

In general, the reward function may have many components, e.g., factors that determine a quality of a predicted channel dynamic. For example, the reward function is based on the deviation between the predicted channel dynamic and the calculated channel dynamic. For example, the reward function may reward a predicted channel dynamic with a small deviation and sanction a predicted channel dynamic with a larger deviation.

The machine learning model may be trained using reinforcement learning. As mentioned above, in reinforcement learning, one or more software actors (called "software agents") are trained to take actions in an environment. The one or more software actors may give favorability ratings to the predicted channel dynamic. Based on the taken actions e.g., the favorability ratings, and the resulting deviation between the predicted channel dynamic and the calculated channel dynamic, a reward is calculated. In other words, the reward function may be used to calculate the reward in the reinforcement learning-based training of the machine learning model. Reinforcement learning is based on training the one or more software agents to choose the actions such, that the cumulative reward is increased, leading to software agents that become better at the task they are given (as evidenced by increasing rewards). In examples, the determination of the favorability of the predicted channel dynamic may be repeatedly performed. Between the repetitions, the machine learning model may be adjusted based on the ratings that have led to a high (or low, depending on implementation) reward.

For example, the machine learning model may be trained by repeatedly (e.g., at least two times, at least five times, at least ten times, at least 20 times, at least 50 times, at least 100 times, at least 1000 times) performing a group of training tasks (or method steps). For example, the machine learning model may be trained 220 by repeatedly inputting the training input data into the machine learning model, determining a predicted channel dynamic based on an output of the machine learning model, evaluating the deviation between the predicted channel dynamic and the calculated channel dynamic using the reward function, and adjusting the machine learning model based on a result of the evaluation.

One repetition of the above tasks may be denoted an "epoch" in reinforcement learning. One Epoch is when the entire set of training input data is passed forward and backward through the machine learning model once. Within an epoch, a plurality of batches of training input data may be input into the machine learning model, used to determine the favorability of the predicted channel dynamic, and evaluated. For example, to keep the problem size small, the training data may be subdivided (e.g., "batched") into a plurality of batches, which may be separately provided to the machine learning model. Each batch of the plurality of batches may be input to the machine learning model separately.

Based on the training input data, the machine learning model may provide an output, e.g., the predicted channel dynamic. In the reinforcement learning-based training of the machine learning model, the one or more software actors (which may act based on the machine learning model) may assign a favorability to a predicted channel dynamic, based on the reward function, in order to increase or maximize the reward. In the present case, the predicted channel dynamic may occur based on the output of the machine learning model, e.g., not within the machine learning model. Accordingly, the reward function may be based on the deviation between the predicted channel dynamic and the calculated channel dynamic, which is in turn based on the output of the machine learning model. This assignment of favorability may be evaluated using the reward function. In other words, the software agents may assign a favorability to predicted channel dynamic.

As has been mentioned the machine learning model may comprise one or more embedding layers, which may be based on a non-linear activation function, such as a PReLU or Mish activation function. For example, the one or more embedding layers, which may be neural network layers, may be trained as part of the reinforcement learning training. Similarly, the machine learning model may comprise an attention layer, which may also be trained as part of the reinforcement learning training.

In an example, the method 100 may further comprise receiving a dataset for training or initializing the machine learning model. For example, the UE may receive a data set from another UE in its environment, which the other UE used to predict a channel dynamic. The environment of the other UE may be comparable to the environment of the UE, thus an increased data set providing an increased training input for the machine learning model may be achieved.

In an example, adjusting the transmission parameter may be performed by reducing a channel quality reporting. For example, a combination of measurements for the CSI report, namely Channel Quality Indicator, CQI, Precoding Matrix Index, PMI and Rank Indicator, RI, may change. For example, for different CSI reports not all three measures may be performed, but only one or two measures may be performed, depending on the predicted channel dynamic of the radio channel. Thus, a reporting overhead can be further reduced, without or in addition to reducing a CSI reference signal rate, e.g., a pilot signal rate, .

In an example, the UE may be a vehicle. For example, the vehicle may be capable to perform the method 100. The vehicle may obtain information about the environment by determining information about the environment using one or more sensors of the vehicle and/or receiving information about the environment. For example, the information about the environment may be received from a communication device of the mobile communication system, e.g., from the network entity, a vehicle, an infrastructure, a smartphone, a base station etc. For example, the one or more sensors may belong to a wide variety of UE sensors, e.g., a radar sensor, a lidar sensor, automotive radar, ultrasound sensor or a vision-related sensor such as camera or infrared sensors.

The information about the environment can be rather (or fully) static, e.g., determined by a map considering immobile obstacles (e.g., infrastructure like house, traffic light etc.) and/or rather dynamic, e.g., determined by sensor data considering, e.g., movement speeds of mobile obstacles (e.g., vehicles, pedestrian, cyclist etc.) in the environment. For example, the predicted channel dynamic may solely depend on a (predicted) movement speed of the UE (e.g., based on a planned route) and static information about the environment (e.g., determined by a map). Thus, the prediction of the channel dynamic may be performed with less computational resources and without a need of further sensors. This may be advantageously in an environment with low density of obstacles, e.g., an open landscape, resulting in an eased determination of the predicted channel dynamic.

For example, the predicted channel dynamic may depend on an environment with a high density of (mobile) obstacles, e.g., a downtown area. Thus, the prediction of the channel dynamic may be improved by measurement data of the one or more sensors, which may reflect a real-time image of the environment.

For example, measurement data of the one or more sensors may be combined with received information about the environment. For example, the received information may provide information about immobile obstacles and the measurement data may provide information about mobile obstacles. Thus, a determination using one or more sensors may be eased (since solely mobile obstacles may be needed to be determined) and/or an effort using the one or more sensors may be decreased. Optionally or alternatively, the data of the immobile obstacles may be used to verify determined immobile obstacles using the one or more sensors or vice versa.

For example, the UE may be equipped with techniques that can interpret Cooperative Perception data (such as Cooperative Perception Messages (CPM)) received from other road agents (other vehicles, pedestrians, infrastructure, back-end applications), which may be frequently updated in a periodical or event-triggered fashion. Further, the UE may be capable of fusing the data obtained with its sensing device (the one or more sensors) and the data received (e.g., received via CPM) to build an environmental model.

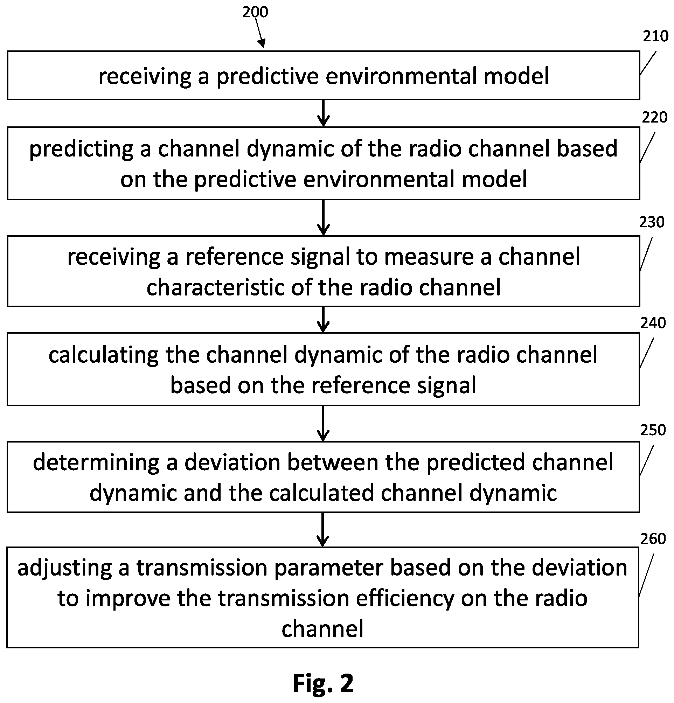

More details and aspects are mentioned in connection with the embodiments described above and/or below. The example shown in Fig. 1 may comprise one or more optional additional features corresponding to one or more aspects mentioned in connection with the proposed concept or one or more examples described below (e.g., Fig. 2 - 3).

Fig. 2 shows an example of a method 200 for a network entity. The method 200 for the network entity is for improving a transmission efficiency on a radio channel. The method 200 comprises receiving 210 a predictive environmental model and predicting 220 a channel dynamic of the radio channel based on the predictive environmental model. Further, the method 200 comprises receiving 230 a reference signal to measure a channel characteristic of the radio channel and calculating 240 the channel dynamic of the radio channel based on the reference signal. The method 200 also comprises determining 250 a deviation between the predicted channel dynamic and the calculated channel dynamic and adjusting 260 a transmission parameter based on the deviation to improve the transmission efficiency on the radio channel. The network entity may be a counterpart to the UE described with reference to Fig. 1. For example, the network entity may be capable to perform the same method steps as the UE described with respect to Fig. 1.

The network entity may be capable to adjust the transmission parameter, e.g., based on a predictive environmental model received from UE. As the network entity may not be equipped with sensors the network entity may rely on information received from another communication device, e.g., the UE. This information can be the predicted environmental model, which can be used by network entity to predict a channel dynamic. For the prediction a machine learning model as described above may be used. This way, the network instance can handle the computationally intensive machine learning model, which can reduce the energy consumption of the UE. Further, the network entity may use the machine learning model for predicting cannel dynamics to a plurality of UEs, which may increase a performance of the mobile communication system.

Alternatively, the network entity may receive only dynamic information about a mobile obstacle in the environment and may determine the predicted environmental model. This way, the network entity may be enabled to perform the same method as the UE, excluding determining information about an environment.

In an example, adjusting the transmission parameter is performed by reducing a content of a report, a reporting rate and/or a reference signal rate of the user equipment. This way, a signaling overhead can be reduced.

In an example, the method 200 may further comprise if the deviation is above a threshold repredicting the channel dynamic redetermining the deviation between the repredicted channel dynamic and the calculated channel dynamic and if the redetermined deviation is below the threshold adjusting the transmission parameter else repeating the repredicting and redetermining until the deviation is below the threshold. This way, a machine learning model can be trained and/or a reliability of the adjustment of the transmission parameter can be increased (see for example the description of the UE with respect to Fig. 1).

In an example, the predicting and/or repredicting is based on a machine learning model trained with the predicted channel dynamic and the calculated channel dynamic. The machine learning model may be the same as described with respect to Fig. 1. This way, an energy and/or resource intensive computational task can be performed by the network entity, which may increase an up-time of the UE. Further, the network entity may receive a plurality of data sets from different communication devices connected to the network entity, e.g., further UEs. This way, a training of the machine learning model may be improved, which may improve the prediction of the channel dynamic.

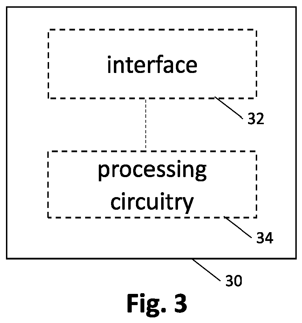

More details and aspects are mentioned in connection with the embodiments described above and/or below. The example shown in Fig. 2 may comprise one or more optional additional features corresponding to one or more aspects mentioned in connection with the proposed concept or one or more examples described above (Fig. 1) and/or below (e.g., Fig. 3).

Fig. 3 shows a block diagram of an apparatus 30. The apparatus 30 comprises one or more interfaces 32 configured to communicate with a network entity or user equipment. The apparatus 30 further comprises processing circuitry 34 configured to control the one or more interfaces and to perform the method for UE described above (e.g., described with reference to Fig.1) and/or the method for a network entity described above (e.g., described with reference to Fig. 2). For example, the apparatus 30 can be comprised by a vehicle. For example, the vehicle may be a land vehicle, such a road vehicle, a car, an automobile, an off-road vehicle, a motor vehicle, a bus, a robo-taxi, a van, a truck or a lorry. Alternatively, the vehicle may be any other type of vehicle, such as a train, a subway train, a boat or a ship. For example, the proposed concept may be applied to public transportation (trains, bus) and future means of mobility (e.g., robo-taxis).

For example, the apparatus 30 can be the UE, where the interface is configured to communicate with the network entity. Alternatively, the apparatus 30 can be the network entity, where the interface 32 is configured to communicate with the UE.

In an example, a vehicle comprises the apparatus 30. Thus, the vehicle may be capable to perform the method as described with reference to the UE in Fig. 1. For example, the vehicle, e.g., the UE, may perceive its environment, e.g., using LIDAR, radar, camera, WiFi, Blue-tooth, etc. Then, the UE may create an environmental model based on its perception and may know the used antenna setup, e.g., a directivity, beam width, etc. The UE may be further utilized to estimate the CSI, e.g., to generate an environmental model-based CSI estimation. This may comprise discretizing the vehicle perception with respect to the wave propagation properties, considering distance between transmitter and receiver, considering velocity of both transmitter and receiver, considering the properties of the observed objects, considering the antenna setup and the Fresnel zone and especially the objects inside this zone and/or a combination of the mentioned. The UE may than estimate the CSI based on the pilot signals and may use a learning approach (e.g., machine learning) to minimize the cost function by implementing the following mechanisms. The Cost function may comprise a perception/environmental model based on CSI estimation and a pilot-based CSI estimation. The learning approach for the algorithm that minimizes the cost function at OEM/provider/fleet-level may use a centralized knowledge and federated learning (at a backend), especially decentralized learning (at each communication node). For example, the learning approach for each UE (at each communication node) may be offline learning of larger pilot sequences and online learning of smaller pilot sequences. Further, the UE may use the environmental model-based CSI estimation and reduce the signaling (pilot, reference signals) by applying estimated CSI to reduce the overhead associated with precise pilot-based CSI characterization. The network entity described with reference to Fig. 2 may perform the same method. Alternative, the network entity (and also the UE) may exclude perceiving the environment and may instead receive environmental information, e.g., from a communication device in the environment.

As shown in Fig. 3 the respective one or more interfaces 32 are coupled to the respective processing circuitry 34 at the apparatus 30. In examples the processing circuitry 34 may be implemented using one or more processing units, one or more processing devices, any means for processing, such as a processor, a computer or a programmable hardware component being operable with accordingly adapted software. Similar, the described functions of the processing circuitry 34 may as well be implemented in software, which is then executed on one or more programmable hardware components. Such hardware components may comprise a general-purpose processor, a Digital Signal Processor (DSP), a micro-controller, etc. The processing circuitry 34 is capable of controlling the interface 32, so that any data transfer that occurs over the interface and/or any interaction in which the interface may be involved may be controlled by the processing circuitry 34.

In an embodiment the apparatus 30 may comprise a memory and at least one processing circuitry 34 operably coupled to the memory and configured to perform the below mentioned method.

In examples the one or more interfaces 32 may correspond to any means for obtaining, receiving, transmitting or providing analog or digital signals or information, e.g., any connector, contact, pin, register, input port, output port, conductor, lane, etc. which allows providing or obtaining a signal or information. An interface may be wireless or wireline and it may be configured to communicate, e.g., transmit or receive signals, information with further internal or external components. The one or more interfaces 32 may comprise further components to enable communication between vehicles. Such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

More details and aspects are mentioned in connection with the embodiments described above. The example shown in Fig. 3 may comprise one or more optional additional features corresponding to one or more aspects mentioned in connection with the proposed concept or one or more examples described above (Fig. 1 - 2).

The aspects and features described in relation to a particular one of the previous examples may also be combined with one or more of the further examples to replace an identical or similar feature of that further example or to additionally introduce the features into the further example.

Examples may be compliant to or even comprised in certain standard specifications, such as those specified by the 3GPP. Configuration information may for example be communicated using signaling radio bearers, e.g., by means of Radio Resource Control (RRC) messages, which are, for example, specified in the *.331 series of 3GPP as layer 3 control plane messages. For example, physical layer specification, e.g., by means of Doppler Delay Resolutions and other physical layer specifications may also be affected by present embodiments, e.g., *.201, *.211, *.212, *.213, *.214, *.216 series in the 3GPP specifications.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The aspects and features described in relation to a particular one of the previous examples may also be combined with one or more of the further examples to replace an identical or similar feature of that further example or to additionally introduce the features into the further example.

### List of reference signs

30 apparatus
32 interface
34 processing circuitry
100 method for user equipment
110 obtaining a predictive environmental model
120 predicting a channel dynamic of the radio channel
130 receiving a reference signal
140 calculating the channel dynamic
150 determining a deviation
160 adjusting a transmission parameter
200 method for a network entity
210 obtaining a predictive environmental model
220 predicting a channel dynamic of the radio channel
230 receiving a reference signal
240 calculating the channel dynamic
250 determining a deviation
260 adjusting a transmission parameter

## Claims

1. A method (100) for user equipment for improving a transmission efficiency on a radio channel, comprising
obtaining (110) a predictive environmental model;
predicting (120) a channel dynamic of the radio channel based on the predictive environmental model;
receiving (130), from a network device,
a reference signal to measure a channel characteristic of the radio channel;
calculating (140) the channel dynamic of the radio channel based on the reference signal; determining (150) a deviation between the predicted channel dynamic and the calculated channel dynamic;
adjusting (160) a transmission parameter based on the deviation to improve the transmission efficiency on the radio channel; and
if the deviation is above a threshold repredicting the channel dynamic;
redetermining the deviation between the repredicted channel dynamic and the calculated channel dynamic; and
if the redetermined deviation is below the threshold adjusting the transmission parameter by reducing a reference signal rate and/or a report content, by informing the network device of the adjustment; else repeating the repredicting and redetermining until the deviation is below the threshold.

2. The method (100) according to claim 1, wherein
the repredicting is based on a new predictive environmental model.

3. The method (100) according to claim 1 or 2, wherein
the predicting and/or repredicting is based on a machine learning model trained with the predicted channel dynamic and the calculated channel dynamic.

4. The method (100) according to claim 3, further comprising
receiving a dataset for training or initializing the machine learning model.

5. The method (100) according to any of the claims 1 - 4, wherein
adjusting the transmission parameter is performed by reducing a channel quality reporting.

6. A vehicle performing the method (100) according to any of the preceding claims,
wherein
information about the environment is obtained by
determining information about the environment using one or more sensors of the vehicle; and/or
receiving information about the environment.

7. A method (200) for a network entity for improving a transmission efficiency on a radio channel used for communication with a user equipment, comprising
receiving (210) a predictive environmental model;
predicting (220) a channel dynamic of the radio channel based on the predictive environmental model;
receiving (230), from a network device,
a reference signal to measure a channel characteristic of the radio channel;
calculating (240) the channel dynamic of the radio channel based on the reference signal; determining (250) a deviation between the predicted channel dynamic and the calculated channel dynamic;
adjusting (260) a transmission parameter based on the deviation to improve the transmission efficiency on the radio channel; and
if the deviation is above a threshold repredicting the channel dynamic;
redetermining the deviation between the repredicted channel dynamic and the calculated channel dynamic; and
if the redetermined deviation is below the threshold adjusting the transmission parameter by reducing a reference signal rate and/or a report content, by informing the network device of the adjustment; else repeating the repredicting and redetermining until the deviation is below the threshold.

8. The method (200) according to claim 7, wherein
the predicting and/or repredicting is based on a machine learning model trained with the predicted channel dynamic and the calculated channel dynamic.

9. An apparatus (30), comprising:
one or more interfaces (32) configured to communicate with a communication device; and
processing circuitry (34) configured to control the one or more interfaces and to:
perform the method according to any of claims 1 - 5, 7 - 8.

10. A vehicle comprising the apparatus (30) according to claim 9.

11. A computer program having a program code for performing the method (100; 200) according to any one of claims 1-5 or 7-8, when the computer program is executed on a computer, a processor, or a programmable hardware component.

## Patentansprüche

1. Verfahren (100) für ein Benutzergerät zur Verbesserung der Übertragungseffizienz auf einem Funkkanal, umfassend
Erhalten (110) eines prädiktiven Umweltmodells;
Vorhersagen (120) einer Kanaldynamik des Funkkanals auf der Grundlage des prädiktiven Umgebungsmodells;
Empfangen (130), von einer Netzwerkvorrichtung, eines Referenzsignals zur Messung einer Kanalcharakteristik des Funkkanals;
Berechnen (140) der Kanaldynamik des Funkkanals basierend auf dem Referenzsignal;
Bestimmen (150) einer Abweichung zwischen der vorhergesagten Kanaldynamik und der berechneten Kanaldynamik;
Anpassen (160) eines Übertragungsparameters auf der Grundlage der Abweichung, um die Übertragungseffizienz auf dem Funkkanal zu verbessern; und
wenn die Abweichung einen Schwellenwert überschreitet, erneutes Vorhersagen der Kanaldynamik;
Neubestimmen der Abweichung zwischen der neu vorhergesagten und der berechneten Kanaldynamik; und
wenn die neu bestimmte Abweichung unterhalb des Schwellenwerts liegt, Anpassen des Übertragungsparameters, indem eine Referenzsignalrate und/oder ein Berichtsinhalt reduziert wird, indem die Netzwerkvorrichtung über die Anpassung informiert wird; andernfalls Wiederholen des erneuten Vorhersagens und Neubestimmens, so lange, bis die Abweichung unter dem Schwellenwert liegt.

2. Verfahren (100) nach Anspruch 1, wobei
das erneute Vorhersagen auf einem neuen prädiktiven Umweltmodell basiert.

3. Verfahren (100) nach Anspruch 1 oder 2, wobei
das Vorhersagen bzw. erneute Vorhersagen auf einem maschinellen Lernmodell basiert, das mit der vorhergesagten Kanaldynamik und der berechneten Kanaldynamik trainiert wurde.

4. Verfahren (100) nach Anspruch 3, ferner umfassend
Empfangen eines Datensatzes zum Trainieren oder Initialisieren des maschinellen Lernmodells.

5. Verfahren (100) nach einem der Ansprüche 1 bis 4, wobei
Anpassen der Übertragungsparameter durch Reduzieren einer Kanalqualitätsberichterstattung erfolgt.

6. Fahrzeug, das das Verfahren (100) nach einem der vorstehenden Ansprüche ausführt, wobei
Informationen über die Umgebung erhalten werden durch
Bestimmen von Informationen über die Umgebung unter Verwendung eines oder mehrerer Sensoren des Fahrzeugs;
und/oder
durch Empfangen von Informationen über die Umgebung.

7. Verfahren (200) für eine Netzwerkeinheit zur Verbesserung der Übertragungseffizienz auf einem Funkkanal, der zur Kommunikation mit einem Benutzergerät verwendet wird, umfassend
Empfangen (210) eines prädiktiven Umweltmodells;
Vorhersagen (220) einer Kanaldynamik des Funkkanals auf der Grundlage des prädiktiven Umgebungsmodells;
Empfangen (230), von einer Netzwerkvorrichtung, eines Referenzsignals zum Messen einer Kanalcharakteristik des Funkkanals;
Berechnen (240) der Kanaldynamik des Funkkanals basierend auf dem Referenzsignal;
Bestimmen (250) einer Abweichung zwischen der vorhergesagten Kanaldynamik und der berechneten Kanaldynamik;
Anpassen (260) eines Übertragungsparameters auf der Grundlage der Abweichung, um die Übertragungseffizienz auf dem Funkkanal zu verbessern; und
wenn die Abweichung einen Schwellenwert überschreitet, erneutes Vorhersagen der Kanaldynamik;
Neubestimmen der Abweichung zwischen der neu vorhergesagten und der berechneten Kanaldynamik; und
wenn die neu bestimmte Abweichung unterhalb des Schwellenwerts liegt, Anpassen des Übertragungsparameters, indem eine Referenzsignalrate und/oder ein Berichtsinhalt reduziert wird, indem die Netzwerkvorrichtung über die Anpassung informiert wird; andernfalls Wiederholen des erneuten Vorhersagens und Neubestimmens, so lange, bis die Abweichung unter dem Schwellenwert liegt.

8. Verfahren (200) nach Anspruch 7, wobei
das Vorhersagen bzw. erneute Vorhersagen auf einem maschinellen Lernmodell basiert, das mit der vorhergesagten Kanaldynamik und der berechneten Kanaldynamik trainiert wurde.

9. Einrichtung (30), umfassend:
eine oder mehrere Schnittstellen (32), die konfiguriert sind, um mit einer Kommunikationsvorrichtung zu kommunizieren; und
eine Verarbeitungsschaltung (34), die konfiguriert ist, um die eine oder die mehreren Schnittstellen zu steuern, und um:
das Verfahren nach einem der Ansprüche 1 bis 5, 7 bis 8 durchzuführen.

10. Fahrzeug, umfassend die Einrichtung (30) nach Anspruch 9.

11. Computerprogramm, das einen Programmcode zum Durchführen des Verfahrens (100, 200) nach einem der Ansprüche 1 bis 5 oder 7 bis 8 aufweist, wenn das Computerprogramm auf einem Computer, einem Prozessor oder einer programmierbaren Hardwarekomponente ausgeführt wird.

## Revendications

1. Procédé (100) pour un équipement utilisateur permettant d'améliorer une efficacité de transmission sur un canal radio, comprenant
l'obtention (110) d'un modèle environnemental prédictif ;
la prédiction (120) d'une dynamique de canal du canal radio sur la base du modèle environnemental prédictif ;
la réception (130), à partir d'un dispositif de réseau, d'un signal de référence pour mesurer une caractéristique de canal du canal radio ;
le calcul (140) de la dynamique de canal du canal radio sur la base du signal de référence ; la détermination (150) d'un écart entre la dynamique de canal prédite et la dynamique de canal calculée ;
l'ajustement (160) d'un paramètre de transmission sur la base de l'écart afin d'améliorer l'efficacité de transmission sur le canal radio ; et
si l'écart est supérieur à un seuil, la reprédiction de la dynamique de canal ;
la redétermination de l'écart entre la dynamique de canal reprédite et la dynamique de canal calculée ; et
si l'écart redéterminé est inférieur au seuil, l'ajustement du paramètre de transmission en réduisant un débit de signal de référence et/ou un contenu de rapport, en informant le dispositif de réseau de l'ajustement ; sinon, la répétition de la reprédiction et de la redétermination jusqu'à ce que l'écart soit inférieur au seuil.

2. Procédé (100) selon la revendication 1, dans lequel
la reprédiction est basée sur un nouveau modèle environnemental prédictif.

3. Procédé (100) selon la revendication 1 ou 2, dans lequel
la prédiction et/ou la reprédiction sont basées sur un modèle d'apprentissage automatique entraîné avec la dynamique de canal prédite et la dynamique de canal calculée.

4. Procédé (100) selon la revendication 3, comprenant en outre
la réception d'un ensemble de données pour l'entraînement ou l'initialisation du modèle d'apprentissage automatique.

5. Procédé (100) selon l'une quelconque des revendications 1 à 4, dans lequel
l'ajustement du paramètre de transmission est réalisé en réduisant un rapport de qualité de canal.

6. Véhicule réalisant le procédé (100) selon l'une quelconque des revendications précédentes, dans lequel
des informations concernant l'environnement sont obtenues par
la détermination d'informations concernant l'environnement à l'aide d'un ou de plusieurs capteurs du véhicule ; et/ou
la réception d'informations concernant l'environnement.

7. Procédé (200) pour une entité de réseau permettant d'améliorer une efficacité de transmission sur un canal radio utilisé pour une communication avec un équipement d'utilisateur, comprenant
la réception (210) d'un modèle environnemental prédictif ;
la prédiction (220) d'une dynamique de canal du canal radio sur la base du modèle environnemental prédictif ;
la réception (230), à partir d'un dispositif de réseau,
d'un signal de référence pour mesurer une caractéristique de canal du canal radio ;
le calcul (240) de la dynamique de canal du canal radio sur la base du signal de référence ; la détermination (250) d'un écart entre la dynamique de canal prédite et la dynamique de canal calculée ;
l'ajustement (260) d'un paramètre de transmission sur la base de l'écart afin d'améliorer l'efficacité de transmission sur le canal radio ; et
si l'écart est supérieur à un seuil, la reprédiction de la dynamique de canal ;
la redétermination de l'écart entre la dynamique de canal reprédite et la dynamique de canal calculée ; et
si l'écart redéterminé est inférieur au seuil, l'ajustement du paramètre de transmission en réduisant un débit de signal de référence et/ou un contenu de rapport, en informant le dispositif de réseau de l'ajustement ; sinon, la répétition de la reprédiction et de la redétermination jusqu'à ce que l'écart soit inférieur au seuil.

8. Procédé (200) selon la revendication 7, dans lequel
la prédiction et/ou la reprédiction sont basées sur un modèle d'apprentissage automatique entraîné avec la dynamique de canal prédite et la dynamique de canal calculée.

9. Appareil (30) comprenant :
une ou plusieurs interfaces (32) configurées pour communiquer avec un dispositif de communication ; et
un ensemble de circuits de traitement (34) configuré pour commander la ou les interfaces et pour :
réaliser le procédé selon l'une quelconque des revendications 1 à 5, 7 à 8.

10. Véhicule comprenant l'appareil (30) selon la revendication 9.

11. Programme informatique ayant un code de programme pour réaliser le procédé (100 ; 200) selon l'une quelconque des revendications 1 à 5 ou 7 à 8, lorsque le programme informatique est exécuté sur un ordinateur, un processeur ou un composant matériel programmable.
